# EUROPEAN PATENT SPECIFICATION

(11) **EP 4 129 558 B1**
(45) Date of publication and mention of the grant of the patent: **30.10.2024**
(21) Application number: 21795705.9
(22) Date of filing: 22.03.2021
(51) Int. Cl.: B23K 26/32, B23K 26/22, H02K 15/04, B23K 26/60, B23K 26/244, B23K 26/06, B23K 26/323, H02K 15/00, B23K 101/36, B23K 101/38, B23K 103/12, B23K 103/18

(54) **LASER WELDING METHOD AND MANUFACTURING METHOD OF ELECTRIC ROTATING MACHINE BY THE LASER WELDING METHOD**
LASERSCHWEISSVERFAHREN UND VERFAHREN ZUR HERSTELLUNG EINER ELEKTRISCHEN DREHMASCHINE DAMIT
PROCÉDÉ DE SOUDAGE AU LASER ET PROCÉDÉ DE FABRICATION D'UNE MACHINE ÉLECTRIQUE ROTATIVE METTANT EN OEUVRE UN TEL PROCÉDÉ

(30) Priority: 30.04.2020 JP 2020079962
(43) Date of publication of application: 08.02.2023
(73) Proprietor: Daikin Industries, Ltd., Osaka-shi, Osaka 530-0001 (JP); OSAKA UNIVERSITY, Suita-shi Osaka 565-0871 (JP)
(72) Inventor: ITOU, Masatoshi, Osaka-shi, Osaka 530-8323 (JP); NISHIKAWA, Takashi, Osaka-shi, Osaka 530-8323 (JP); TSUKAMOTO, Masahiro, Suita-shi, Osaka 565-0871 (JP); SATO, Yuji, Suita-shi, Osaka 565-0871 (JP); SUGA, Tetsuo, Suita-shi, Osaka 565-0871 (JP)
(74) Representative: Goddar, Heinz J.
(86) International application number: PCT/JP2021/011791
(87) International publication number: WO 2021/220666

(56) References cited:
- CN-A- 107 598 371
- CN-A- 109 926 719
- JP-A- 2005 313 195
- JP-A- 2006 066 794
- JP-A- 2017 098 161
- JP-A- 2019 118 159
- JP-A- 2020 039 191
- JP-A- 2020 039 191
- JP-A- H05 104 276

## Description

The present invention relates to a laser welding method and a method for manufacturing an electric rotating machine by the laser welding method.

### BACKGROUND ART

< CN 107 598 371 A (disclosing the preamble of claims 1 and 7 respectively) describes a copper piece welding method comprising: in a first period of time, a first laser with a first power is used to irradiate a first preset areas and a first molten pool is formed in the first preset area. Thereafter, a second molten pool is formed by a second laser. A spots irradiated with the first and second lasers are different from each other and the portion welded by the first laser is irradiated with the second laser.

CN 109 926 719 A also describes a welding method and device for copper and copper alloy materials. The known welding method is performed using composite laser light including main-band laser light and sub-band laser light. >

A welding method using laser light has been widely known. For example, Patent Document 1 discloses that a workpiece is preheated by irradiation with a first laser light along a planned welding line, and is welded by irradiation of the preheated portion with a second laser light while a filler wire is supplied to the preheated portion.

### CITATION LIST

### PATENT DOCUMENT

Patent Document 1: Japanese Unexamined Patent Publication No. 2009-269036

### SUMMARY OF THE INVENTION

### SOLUTION TO THE PROBLEM

In an electric rotating machine such as an electric motor or an electric generator, a plurality of conductor segments is respectively inserted into a plurality of slots formed at a stator core, and end portions of the conductor segments inserted into the slots are welded.

In the case where the end portions of the conductor segments are welded by arc welding, it is, due to high heat input, necessary to increase the length of an exposed conductor portion extending to the end portion of the conductor segment in order to prevent melting of an insulating coating that insulates among the conductor segments, and for this reason, it is difficult to reduce a coil end portion in size. Moreover, for arc welding, grounding is necessary.

In the case of using laser light, welding can be performed with less thermal influence because of high energy density. However, the conductor segment is generally made of copper, and copper has a low energy absorption rate in the wavelength range of the laser light used for welding. For this reason, it is difficult to perform welding with the laser light.

It is an object of the present disclosure to provide a laser welding method for welding a material containing copper as a main component with laser light.

### SOLUTION TO THE PROBLEM

The present invention relates to a laser welding method for welding a material (10) containing copper as a main component according to claim 1. The method includes heating the material (10) by irradiation with a first laser light (L1) and welding the material (10) by irradiation of a portion, which has been irradiated with the first laser light (L1), of the material (10) with a second laser light (L2) with which an energy absorption rate of copper contained in the material (10) increases by an increase in a temperature of the material (10).

In the first aspect, the material (10) containing copper as the main component is heated by irradiation with the first laser light (L1). In addition, the portion of the material (10) irradiated with the first laser light (L1) is irradiated with the second laser light (L2). With the second laser light (L2), the energy absorption rate of copper contained in the material (10) increases by an increase in the temperature of the material (10). Thus, when the portion heated and temperature-increased by irradiation with the first laser light (L1) is irradiated with the second laser light (L2), the second laser light (L2) is absorbed by copper contained in the material (10) at a high energy absorption rate, and high energy density is applied to the material (10). Accordingly, the material (10) is melted, and can be welded. Thus, the material (10) containing copper as the main component can be welded using a combination of the first and second laser lights (L1, L2).

According to the present invention, the wavelength of the first laser light (L1) is 470 nm or less. Since the energy absorption rate of copper is increased, the temperature of the material (10) can be stably increased.

In a second embodiment of the present invention, a light source of the first laser light (L1) is a diode laser. In the fourth aspect, the first laser light (L1) can be easily obtained.

In a third embodiment of the present invention, the wavelength of the second laser light (L2) is 800 nm or more. In the fifth aspect, the material (10) can be efficiently brought into a weldable molten state.

In a fourth embodiment of the present invention, a light source of the second laser light (L2) is an infrared laser. In the sixth aspect, the second laser light (L2) can be easily obtained.

In a fifth embodiment of the present invention, the number of beams of the second laser light (L2) is one or more for one beam of the first laser light (L1). In the seventh aspect, the number of beams of the second laser light (L2) is at least one for one beam of the first laser light (L1), but if there are two or more beams of the second laser light (L2) for one beam of the first laser light (L1), the material (10) can be more uniformly melted.

In a sixth embodiment of the present invention, the material (10) is irradiated with two or more pairs of the first and second laser lights (L1, L2). In the eighth aspect, variation in welding can be reduced.

The present invention further relates to a method for manufacturing an electric rotating machine (30) according to claim 7, in which a plurality of conductor segments (32) is respectively inserted into a plurality of slots formed at a stator core (31) and end portions of the plurality of conductor segments (32) inserted into the slots are made of a material (10) containing copper as a main component. The method includes welding the end portions of the plurality of conductor segments (32) by the laser welding method being described previously.

According to the invention defined in claim 7, the first and second laser lights (L1, L2) are combined so that the end portions of the conductor segments (32) made of the material (10) containing copper as the main component can be welded to each other. Since high energy density is applied to the conductor segment (32), it is not necessary to increase the length of an exposed conductor portion extending to the end portion of the conductor segment (32), and therefore, a coil end portion can be reduced in size. Further, since high-speed welding among the end portions of the conductor segments (32) can be performed, a high production capacity can be obtained. Moreover, since additional equipment for obtaining a high production capacity is not necessary, reduction in an equipment investment can be achieved.

In an embodiment of the present invention according to claim 7, each of the end portions of the plurality of conductor segments (32) is irradiated with one or more pairs of the first and second laser lights (L1, L2). In the tenth aspect, variation in welding among the end portions of the conductor segments (32) can be reduced.

### BRIEF DESCRIPTION OF THE DRAWINGS

FIG. 1 is a sectional view showing a laser welding method according to an embodiment.
FIG. 2 is a graph showing a relationship between the wavelength of laser light at 300 K and the energy absorption rates of various metals including copper.
FIG. 3 is a plan view showing the positions of beams of first and second laser lights (L1, L2).
FIG. 4 is a plan view showing a variation of the positions of beams of the first and second laser lights (L1, L2).
FIG. 5 is a perspective view of an electric rotating machine (30).
FIG. 6 is a perspective view showing a laser welding method for laser-welding end portions of a plurality of conductor segments (32) of the electric rotating machine (30).
FIG. 7 is a perspective view showing the welded end portions of the plurality of conductor segments (32) of the electric rotating machine (30).
FIG. 8 is a perspective view showing a variation of the laser welding method for laser-welding the end portions of the plurality of conductor segments (32) of the electric rotating machine (30).
FIG. 9 is a front view of the welded end portions of the conductor segments (32).
FIG. 10 is a perspective view showing a method for irradiating the end portions of the conductor segments (32) with the first and second laser lights (L1, L2).
FIG. 11 is a perspective view showing a variation of the method for irradiating the end portions of the conductor segments (32) with the first and second laser lights (L1, L2).

### DESCRIPTION OF EMBODIMENTS

In the following, an embodiment will be described in detail.

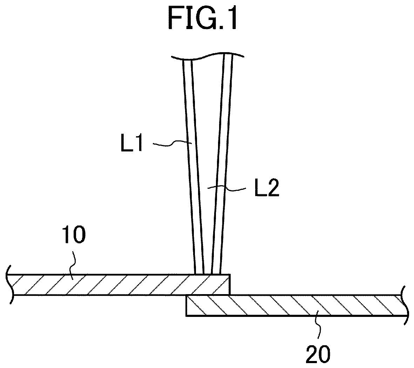

In a laser welding method according to the embodiment, a material (10) containing copper as a main component is irradiated with laser light, and is welded to a bonding target metal material (20). In this case, as shown in FIG. 1, a surface of the material (10) is heated by irradiation with a first laser light (L1), and is welded to the bonding target metal material (20) by irradiation of the heated surface of the portion, which has been irradiated with the first laser light (L1), of the material (10) with a second laser light (L2) with which the energy absorption rate of copper contained in the material (10) increases by an increase in the temperature of the material (10).

In the laser welding method according to this embodiment, the material (10) containing copper as the main component is heated by irradiation with the first laser light (L 1). In addition, the portion of the material (10) irradiated with the first laser light (L1) is irradiated with the second laser light (L2). With the second laser light (L2), the energy absorption rate of copper contained in the material (10) increases by an increase in the temperature of the material (10). Thus, when the portion heated and temperature-increased by irradiation with the first laser light (L1) is irradiated with the second laser light (L2), the second laser light (L2) is absorbed by copper contained in the material (10) at a high energy absorption rate, and the high energy density is applied to the material (10). Accordingly, the material (10) is melted, and can be welded to the bonding target metal material (20). Thus, the material (10) containing copper as the main component can be welded to the bonding target metal material (20) by use of a combination of the first and second laser lights (L1, L2).

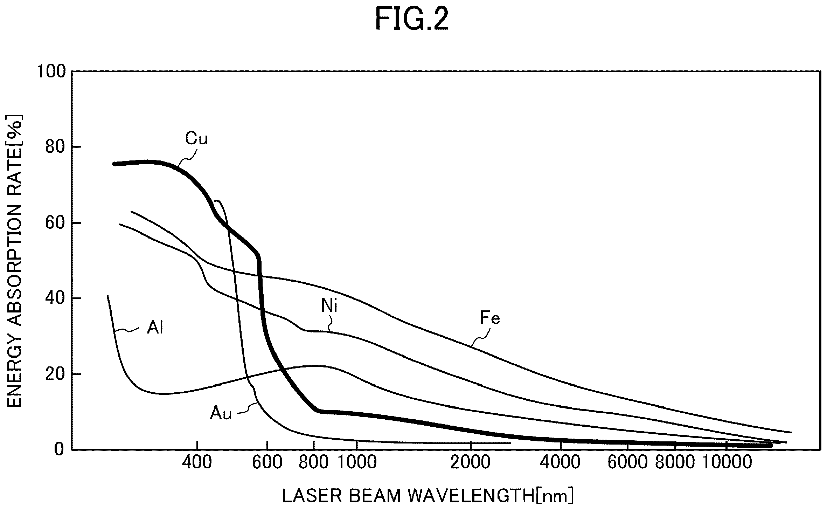

For example, as shown in FIG. 2, for a laser light having a wavelength band of around 500 nm, the energy absorption rate of copper is high, but it is difficult to obtain a level of high energy density which can be used for welding. On the other hand, a laser light having a wavelength band of around 1000 nm can provide high energy density suitable for welding, but the energy absorption rate of copper is low for such a laser light. Here, copper has such properties that when the temperature increases, the energy absorption rate for the laser light having a wavelength band of around 1000 nm increases. Accordingly, the former can be suitably used as the first laser light (L1), and the latter can be suitably used as the second laser light (L2).

Here, the material (10) containing copper as the main component may be either pure copper or a copper alloy containing 50 mass% or more of copper. The bonding target metal material (20) may be made of the same metal as in the material (10), which contains copper as a main component, or may be made of a different type of metal.

The wavelength of the first laser light (L1) is according to the present invention 470 nm or less for efficiently increasing the temperature of the material (10), as the energy absorption rate of copper is high, for stably increasing the temperature of the material (10). The wavelength of the first laser light (L1) is according to the present invention 400 nm or more for a practical perspective. The first laser light (L1) may be a single-wavelength laser light, or may be laser light with a plurality of different wavelengths superimposed.

The energy absorption rate of copper contained in the material (10) for the first laser light (L1) at 300 K is preferably 60% or more, more preferably 80% or more for efficiently increasing the temperature of the material (10).

The power density of the first laser light (L1) is preferably 125000 W/cm² or more, more preferably 500000 W/cm² or more, and preferably 5100000 W/cm² or less for efficiently increasing the temperature of the material (10).

A light source of the first laser light (L1) is preferably a diode laser, more preferably one having an oscillation wavelength band of 400 nm or more to 470 nm or less as described above.

The temperature of the material (10) heated by irradiation with the first laser light (L1) is preferably 200°C or more, more preferably 400°C or more, and preferably 1083°C or less for increasing the energy absorption rate for the second laser light (L2).

The wavelength of the second laser light (L2) is preferably 800 nm or more, more preferably 1030 nm or more, and preferably 1500 nm or less for efficiently bringing the material (10) into a weldable molten state. The wavelength of the second laser light (L2) is preferably 1200 nm or less for a practical perspective The second laser light (L2) may be a single-wavelength laser light, or may be laser light with a plurality of different wavelengths superimposed.

The energy absorption rate of copper contained in the material (10) for the second laser light (L2) after the temperature has increased is preferably 30% or more, more preferably 60% or more for bringing the heated material (10) into the weldable molten state. The energy absorption rate of copper contained in the material (10) for the second laser light (L2) at 300 K before the temperature increases is, for example, 0.9% or more to 8.0% or less.

The power density of the second laser light (L2) is preferably 6250000 W/cm² or more, more preferably 20000000 W/cm² or more, and preferably 200000000 W/cm² or less for efficiently bringing the material (10) into the weldable molten state.

A light source of the second laser light (L2) is preferably an infrared laser.

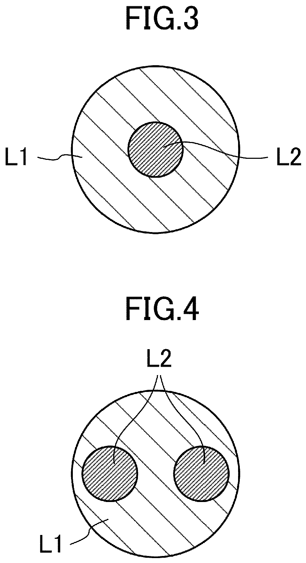

Irradiation of the material (10) with the first and second laser lights (L1, L2) is according to the present invention performed such that the second laser light (L2) is contained in the first laser light (L1), as shown in FIGS. 3 to 5. The number of beams of the second laser light (L2) is one or more for one first laser light (L1), and as shown in FIG. 3, is at least one for one first laser light (L1). However, if there are two or more beams of the second laser light (L2) for one beam of the first laser light (L1) as shown in FIG. 4, the material (10) can be more uniformly melted.

Next, a method of manufacturing an electric rotating machine (30) such as an electric motor or an electric generator by the laser welding method according to the embodiment will be described.

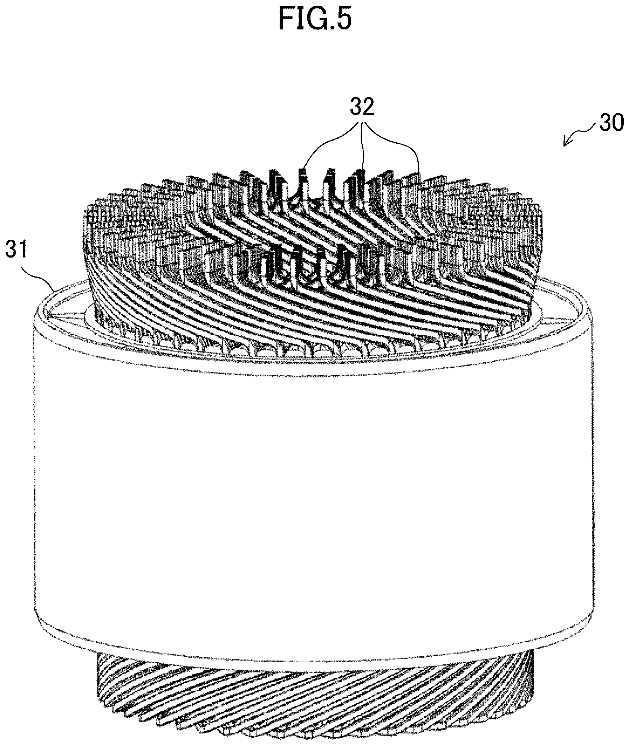

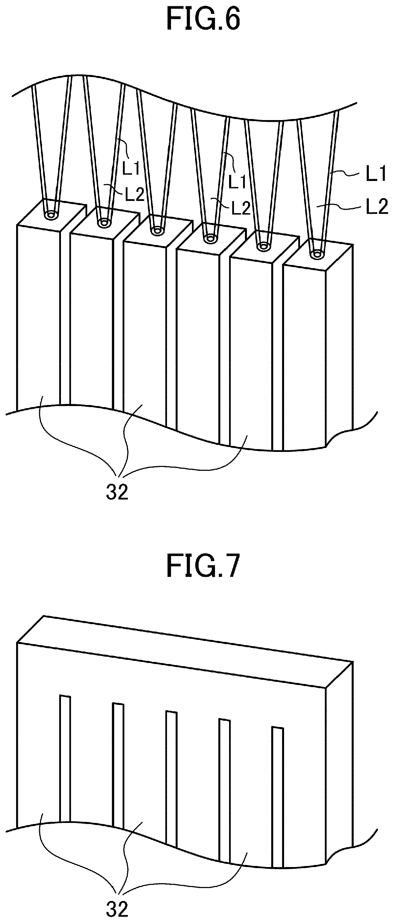

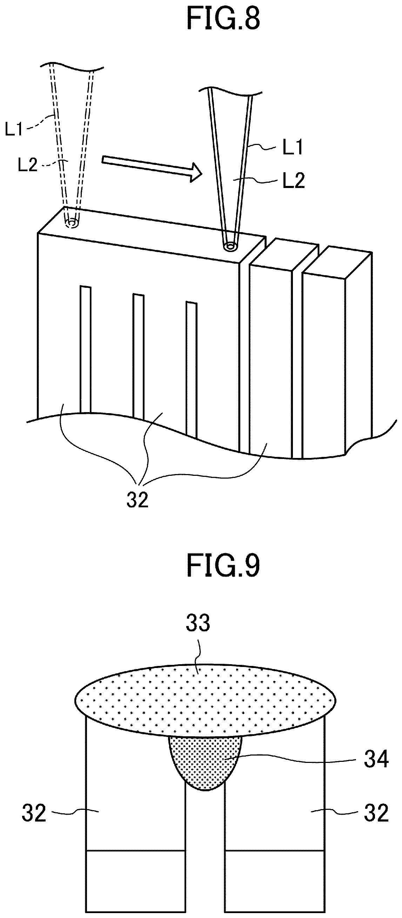

As shown in FIG. 5, in the electric rotating machine (30), a plurality of conductor segments (32) is respectively inserted into a plurality of slots (not shown) formed at a stator core (31), and end portions of the plurality of conductor segments (32) inserted into the slots are made of the material (10) containing copper as the main component. Then, in such manufacturing, each of the end portions of the plurality of conductor segments (32) is spot-irradiated with the first and second laser lights (L1, L2) by the laser welding method according to the embodiment, as shown in FIG. 6. Accordingly, the end portions of the plurality of conductor segments (32) are welded to each other as shown in FIG. 7. In this case, the end portions of the plurality of conductor segments (32) may be irradiated with the first and second laser lights (L1, L2) such that the first and second laser lights (L1, L2) are swept thereon, as shown in FIG. 8.

As described above, the first and second laser lights (L1, L2) are combined using the laser welding method according to the embodiment so that the end portions of the conductor segments (32) made of the material (10) containing copper as the main component can be welded to each other. In this case, and according to the present invention, the first laser light (L1) having a low energy density and the second laser light (L2) having a high energy density are superimposed on each other, thus a thermally-conductive welding portion (33) welded so as to be bridged between end surfaces of the conductor segments (32) and a keyhole-shaped welding portion (34) welded by Infiltration of the material (10) into between the end portions of the conductor segments (32) are formed between the end portions of the conductor segments (32) as shown in FIG. 9. Thus, a high welding strength can be obtained.

Since high energy density is applied to the conductor segment (32), it is not necessary to increase the length of an exposed conductor portion extending to the end portion of the conductor segment (32), and therefore, a coil end portion can be reduced in size. Further, since high-speed welding among the end portions of the conductor segments (32) can be performed, a high production capacity can be obtained. Moreover, since additional equipment for obtaining a high production capacity is not necessary, reduction in an equipment investment can be achieved.

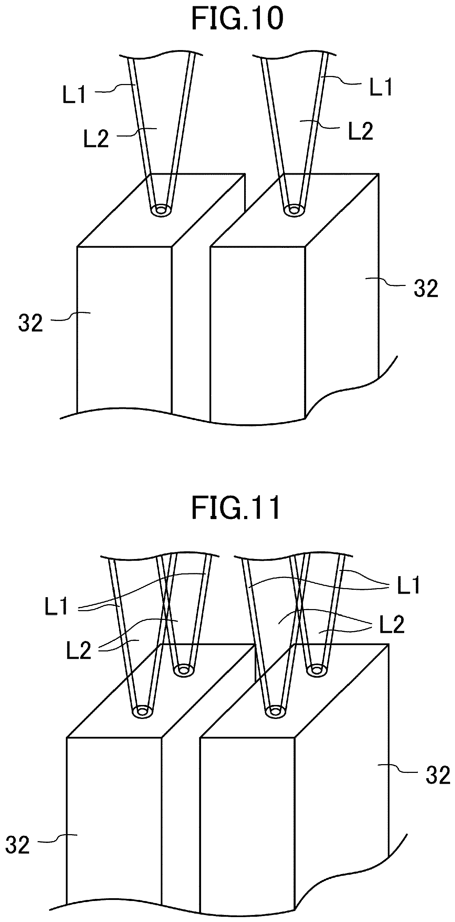

In manufacturing of the electric rotating machine (30), each of the end portions of the plurality of conductor segments (32) is irradiated with one or more pairs of first and second laser lights (L1, L2). Each of the end portions of the plurality of conductor segments (32) is irradiated with at least one pair of first and second laser lights (L1, L2), as shown in FIG. 10. When each end portion is irradiated with two or more pairs of first and second laser lights (L1, L2) as shown in FIG. 11, variation in welding among the end portions of the conductor segments (32) can be reduced.

### INDUSTRIAL APPLICABILITY

The present invention is useful for a laser welding method and a technical field using the laser welding method.

### DESCRIPTION OF REFERENCE CHARACTERS

- L1: First Laser Light
- L2: Second Laser Light
- 10: Material
- 30: Electric Rotating Machine
- 31: Stator Core
- 32: Conductor Segment

## Claims

1. A laser welding method for welding a material (10) containing copper as a main component, the laser welding method comprising:
heating the material (10) by irradiation with a first laser light (L1) and welding the material (10) by irradiation of a portion, which has been irradiated with the first laser light (L1), of the material (10) with a second laser light (L2) with which an energy absorption rate of the copper contained in the material (0) increases by an increase in a temperature of the material (10), wherein
a wavelength of the first laser light (L1) is 400 nm or more and 470 nm or less, the method being **characterised in that**:
the first laser light (L1) and the second laser light (L2) are superimposed on each other, and **in that**:
the second laser light (L2) is contained in the first laser light (L1).

2. The laser welding method of claim 1, wherein a light source of the first laser light (L1) is a diode laser.

3. The laser welding method of claim 1, wherein a wavelength of the second laser light (L2) is 1030 nm or more and 1200 nm or less.

4. The laser welding method of claim 1, wherein a light source of the second laser light (L2) is an infrared laser.

5. The laser welding method of claim 1, wherein
the number of portions irradiated with the second laser light (L2) is two or more for one portion irradiated with the first laser light (L1).

6. The laser welding method of claim 1, wherein
the material (10) is irradiated with two or more pairs of first and second laser lights (L1, L2).

7. A method for manufacturing an electric rotating machine (30) in which a plurality of conductor segments (32) is respectively inserted into a plurality of slots formed at a stator core (31) and end portions of the plurality of conductor segments (32) inserted into the slots are made of a material (10) containing copper as a main component,
the method being **characterised in that** the method comprises the step of:
welding the end portions of the plurality of conductor segments (32) by the laser welding method of any one of claims 1 to 6.

8. The method of claim 7, wherein
each of the end portions of the plurality of conductor segments (32) is irradiated with one or more pairs of first and second laser lights (L1, L2).

## Patentansprüche

1. Laserschweißverfahren zum Schweißen eines Materials (10), das Kupfer als eine Hauptkomponente enthält, wobei das Laserschweißverfahren umfasst:
Erwärmen des Materials (10) durch Bestrahlung mit einem ersten Laserlicht (L1) und Schweißen des Materials (10) durch Bestrahlung eines Abschnitts des Materials (10), der mit dem ersten Laserlicht (L1) bestrahlt wurde, mit einem zweiten Laserlicht (L2), mit dem eine Energieabsorptionsrate des in dem Material (10) enthaltenen Kupfers durch eine Erhöhung einer Temperatur des Materials (10) zunimmt, wobei
eine Wellenlänge des ersten Laserlichts (L1) 400 nm oder mehr und 470 nm oder weniger beträgt,
wobei das Verfahren **dadurch gekennzeichnet ist, dass**:
das erste Laserlicht (L1) und das zweite Laserlicht (L2) einander überlagert werden,
und dadurch, dass:
das zweite Laserlicht (L2) in dem ersten Laserlicht (L1) enthalten ist.

2. Laserschweißverfahren nach Anspruch 1, wobei
eine Lichtquelle des ersten Laserlichts (L1) ein Diodenlaser ist.

3. Laserschweißverfahren nach Anspruch 1, wobei
eine Wellenlänge des zweiten Laserlichts (L2) 1030 nm oder mehr und 1200 nm oder weniger beträgt.

4. Laserschweißverfahren nach Anspruch 1, wobei
eine Lichtquelle des zweiten Laserlichts (L2) ein Infrarotlaser ist.

5. Laserschweißverfahren nach Anspruch 1, wobei
die Anzahl von Abschnitten, die mit dem zweiten Laserlicht (L2) bestrahlt werden, für einen Abschnitt, der mit dem ersten Laserlicht (L1) bestrahlt wird, zwei oder mehr beträgt.

6. Laserschweißverfahren nach Anspruch 1, wobei
das Material (10) mit zwei oder mehr Paaren aus erstem und zweitem Laserlicht (L1, L2) bestrahlt wird.

7. Verfahren zum Herstellen einer elektrischen Rotationsmaschine (30), bei der eine Vielzahl von Leitersegmenten (32) jeweils in eine Vielzahl von Schlitzen eingesetzt ist, die an einem Statorkern (31) ausgebildet sind, und Endabschnitte der Vielzahl von Leitersegmenten (32), die in die Schlitze eingesetzt sind, aus einem Material (10) hergestellt sind, das Kupfer als eine Hauptkomponente enthält,
wobei das Verfahren **dadurch gekennzeichnet ist, dass** das Verfahren die folgenden Schritte umfasst:
Schweißen der Endabschnitte der Vielzahl von Leitersegmenten (32) durch das Laserschweißverfahren nach einem der Ansprüche 1 bis 6.

8. Verfahren nach Anspruch 7, wobei
jeder der Endabschnitte der Vielzahl von Leitersegmenten (32) mit einem oder mehreren Paaren aus erstem und zweitem Laserlicht (L1, L2) bestrahlt wird.

## Revendications

1. Procédé de soudage au laser pour le soudage d'un matériau (10) contenant du cuivre en tant que composant principal, le procédé de soudage au laser comprenant :
le chauffage d'un matériau (10) par irradiation à l'aide d'un premier faisceau laser (L1), et le soudage du matériau (10) par irradiation d'une partie du matériau (10), irradiée par le premier faisceau laser (L1), à l'aide d'un deuxième faisceau laser (L2), par lequel un taux d'absorption d'énergie du cuivre contenu dans le matériau (10) augmente avec une augmentation d'une température du matériau (10),
une longueur d'onde du premier faisceau laser (L1) étant 400 nm ou davantage, et 470 nm ou moins, le procédé étant **caractérisé en ce que** :
le premier faisceau laser (L1) et le deuxième faisceau laser (L2) se superposent,
et **en ce que** :
le deuxième faisceau laser (L2) est contenu dans le premier faisceau laser (L1).

2. Procédé de soudage au laser selon la revendication 1, une source de lumière du premier faisceau laser (L1) étant un laser à diode.

3. Procédé de soudage au laser selon la revendication 1, une longueur d'onde du deuxième faisceau laser (L2) étant 1030 nm ou davantage et 1200 nm ou moins.

4. Procédé de soudage au laser selon la revendication 1, une source de lumière du deuxième faisceau laser (L2) étant un laser infrarouge.

5. Procédé de soudage au laser selon la revendication 1,
le nombre de parties irradiées par le deuxième faisceau laser (L2) étant deux ou davantage pour une partie irradiée par le premier faisceau laser (L1).

6. Procédé de soudage au laser selon la revendication 1,
le matériau (10) étant irradié par deux paires, ou davantage, des premier et deuxième faisceaux laser (L1, L2).

7. Procédé de fabrication d'une machine rotative électrique (30) dans laquelle des segments d'une pluralité de segments conducteurs (32) sont insérés respectivement dans une pluralité de fentes formées dans un noyau de stator (31), et des parties terminales de la pluralité de segments conducteurs (32) insérés dans les fentes sont réalisées avec un matériau (10) contenant du cuivre en tant que composant principal,
le procédé étant **caractérisé en ce qu'**il comprend l'étape :
de soudage des parties terminales de la pluralité de segments conducteurs (32) par le procédé de soudage au laser selon une quelconque des revendications 1 à 6.

8. Procédé selon la revendication 7,
chacune des parties terminales de la pluralité de segments conducteurs (32) étant irradiée par une ou plusieurs paires des premier et deuxième faisceaux laser (L1, L2).
